# EUROPEAN PATENT APPLICATION

(11) **EP 2 333 796 A1**
(43) Date of publication of application: **15.06.2011**
(21) Application number: 08877155.5
(22) Date of filing: 02.10.2008
(51) Int. Cl.: H01F 5/00, H01F 27/28, H01F 38/14, H02J 17/00

(54) **SELF-RESONANT COIL, CONTACTLESS POWER TRANSFERRING APPARATUS, AND VEHICLE**

(71) Applicant: Toyota Jidosha Kabushiki Kaisha, Toyota-shi, Aichi 471-8571 (JP)
(72) Inventor: SASAKI, Masaru, Aichi 471-8571 (JP); ISHIKAWA, Tetsuhiro, Aichi 471-8571 (JP)
(74) Representative: Kuhnen & Wacker
(86) International application number: PCT/JP2008/067886
(87) International publication number: WO 2010/038297

(57) **Abstract**

A self-resonant coil (110, 240) to be used in a non-contact electric power transfer device capable of at least one of electric power transmission and electric power reception by using magnetic field resonance, wherein a coil having a circular shape in a cross section thereof perpendicular to a direction where the coil extends, a circumferential length of the coil that defines the cross section being equal to a length of a line segment that defines a cross-sectional outer peripheral edge of the self-resonant coil (110, 240) when the self-resonant coil (110, 240) is observed in a cross section thereof perpendicular to a direction where the self-resonant coil (110, 240) extends is used as a virtual coil (440), and at least one of a radial width and an axial length of the self-resonant coil (110, 240) in the cross section thereof perpendicular to the direction where the self-resonant coil (110, 240) extends is smaller than a diameter of the cross section of the virtual coil.

## Description

### TECHNICAL FIELD

The present invention relates to a self-resonant coil to be used in a non-contact electric power transfer device adapted to transfer electric power by using magnetic field resonance, a non-contact electric power transfer device having the self-resonance coil, and a vehicle equipped with the non-contact electric power transfer device.

### BACKGROUND ART

Today, a considerable amount of attention is riveted to electric vehicles, such as an electric automobile and a hybrid car, as environment-friendly vehicles. These vehicles are equipped with an electric motor for generating a traveling drive force and a rechargeable power storage device for storing electric power to be supplied to the electric motor. Examples of the hybrid car are a vehicle equipped with an internal combustion engine as a power source in addition to the electric motor, and a vehicle equipped with a fuel battery as a direct current source for driving the vehicle in addition to the power storage device.

In some known hybrid cards, an in-vehicle power storage device can be charged by a power source outside of the vehicle as with electric automobiles. An example of such a hybrid cars is, what is called, a "plug-in hybrid car", in which a household power source can be used to charge the power storage device such that a vehicle charging port is connected to a plug socket provided in a house by a charging cable.

Meanwhile, a power transmission method attracting attention in recent years is wireless power transmission in which neither a power supply code nor a power transmission cable is used. Three known technical methods are prevalently employed in the wireless power transmission; power transmission by using electromagnetic induction, power transmission by using electromagnetic wave, and power transmission by using a resonance technique.

The resonance technique is a non-contact power transmission technology wherein a pair of resonators (for example, a pair of self-resonant coils) is resonated in an electromagnetic field (near field) so that electric power is transferred by way of the electromagnetic field. This technique enables the transmission of such a large power as a few kW over a relatively long distance (for example, a few meters) (see the Patent Document 1 and Non-Patent Document 1).

Japanese Patent Laying-Open No. 2008-87733 (Patent Document 2) recites a non-contact power feeding device for transmitting power based on the mutual dielectric effect of electromagnetic induction. The non-contact power feeding device feeds electric power from a primary coil for feeding power to a secondary coil for receiving power, wherein the primary coil and the secondary coil both have a circular shape in cross section.
Patent Document 1: Japanese Patent Laying-Open No. 2008-87733
Patent Document 2: WO 2007/008646
Non-Patent Document 1: Andre Kurs et al., "Wireless Power Transfer via Strongly Coupled Magnetic Resonances", [online], July 6, 2007, SCIENCE, Volume 317, p.83 - 86, [Searched on September 12, 2007], Internet <URL; http://www.sciencemag. org/cgi/reprint/317/5834/83 pdt>

### DISCLOSURE OF THE INVENTION

### PROBLEMS TO BE SOLVED BY THE INVENTION

In wireless power transmission and reception devices in which the resonance technique is employed, a self-resonant coil for transferring power by way of an electromagnetic field is provided. The self-resonant coil has a circular shape in its cross section perpendicular to a direction where the self-resonant coil extends.

The transmission and the reception of electric power generates a high-frequency electric flow in the self-resonant coil. It is a technical common knowledge that a current density is higher on a surface of the coil than other parts and lower with more distance from the surface (skin effect) when a high-frequency electric flows in the coil.

Due to the effect, the primary coil and the secondary coil recited in Japanese Patent Laying-Open No. 2008-87733 (Patent Document 1) have a rather small current-carrying area, adversely increasing an electrical resistance.

The wireless power transmission and reception devices are often loaded and used in, for example, a vehicle. Therefore, it is highly necessary to form these devices in a compact size.

The present invention was carried out in view of these conventional disadvantages. A main object of the present invention is to provide a self-resonant coil achieving the reduction of an electrical resistance and formed in a compact size, a non-contact electric power transfer device having the self-resonant coil, and a vehicle equipped with the non-contact electric power transfer device.

### MEANS FOR SOLVING THE PROBLEMS

A self-resonant coil according to an aspect of the present invention is a self-resonant coil to be used in a non-contact electric power transfer device for transferring electric power by using magnetic field resonance. As a virtual coil is used a coil having a circular shape in its cross section perpendicular to a direction where the coil extends, wherein a circumferential length that defines the cross section is equal to a length of a line segment that defines a cross-sectional outer peripheral edge of the self-resonant coil when the self-resonant coil is observed in its cross section perpendicular to a direction where the self-resonant coil extends. At least one of a radial width and an axial length of the self-resonant coil in its cross section perpendicular to the direction where the self-resonant coil extends is smaller than a cross-sectional diameter of the virtual coil.

A self-resonant coil according to another aspect of the present invention is a self-resonant coil to be used in a non-contact electric power transfer device for transferring electric power by using magnetic field resonance. The self-resonant coil has first and second main surfaces facing each other. In a cross section of the self-resonant coil, at least a part of a center line passing through between the first main surface and the second main surface extends so as to intersect with a virtual axis line extending in a radial direction of the self-resonant coil.

A self-resonant coil according to still another aspect of the present invention is a self-resonant coil to be used in a non-contact electric power transfer device for transferring electric power by using magnetic field resonance. A cross section of the self-resonant coil perpendicular to a direction where the self-resonant coil extends has a shape obtained by bending or curving a plate-shape member having main surfaces disposed in an axial direction of the self-resonant coil in the axial direction of the self-resonant coil.

A self-resonant coil according to still another aspect of the present invention is a self-resonant coil to be used in a non-contact electric power transfer device for transferring electric power by using magnetic field resonance. A cross section of the self-resonant coil perpendicular to a direction where the self-resonant coil extends has a substantially U shape or a substantially V shape.

The cross section of the self-resonant coil thus having the substantially U shape or the substantially V shape preferably forms a channel portion open in one of axial directions of the self-resonant coil, wherein the channel portion accommodates at least a part of the self-resonant coil axially adjacent to a position of the channel portion.

A curvature of a bottom section of the channel portion is preferably progressively smaller from an end side of the self-resonant coil in one of axial directions toward an end side of the self-resonant coil in the other axial direction.

The self-resonant coil is preferably provided with a dielectric member disposed between the first main surface and the second main surface.

A non-contact electric power transfer device according to the present invention is provided with the self-resonant coil, and a primary coil for transferring electric power to and from the self-resonant coil by using electromagnetic induction.

### EFFECTS OF THE INVENTION

The self-resonant coil, the non-contact electric power transfer device and the non-contact electric power transfer device according to the present invention enable the reduction of an electrical resistance and downsizing of the coil per se.

### BRIEF DESCRIPTION OF THE DRAWINGS

Fig. 1 is an overall view of a power feeding system according to a preferred embodiment of the present invention.
Fig. 2 is a diagram for describing the rationale of power transmission in which a resonance technique is employed.
Fig. 3 is a graph illustrating a relationship between a distance from a current source (magnetic current source) and an electromagnetic field intensity.
Fig. 4 is a perspective view schematically illustrating a secondary self-resonant coil 110.
Fig. 5 is a sectional view of second self-resonant coil 110 in a cross section thereof perpendicular to a direction where secondary self-resonant coil 110 extends.
Fig. 6 is a sectional view of a part of secondary self-resonant coil 110 in a cross section thereof along the direction of a center axis line O1.
Fig. 7 is a sectional view illustrating a modified embodiment of a spirally-wound state of secondary self-resonant coil 110.
Fig. 8 is a sectional view illustrating a first modified embodiment of a cross-sectional shape of secondary self-resonant coil 110.
Fig. 9 is a sectional view illustrating a second modified embodiment of the cross-sectional shape of secondary self-resonant coil 110.
Fig. 10 is a sectional view illustrating a third modified embodiment of the cross-sectional shape of secondary self-resonant coil 110.
Fig. 11 is a sectional view illustrating a fourth modified embodiment of the cross-sectional shape of secondary self-resonant coil 110.
Fig. 12 is a sectional view illustrating a fifth modified embodiment of the cross-sectional shape of secondary self-resonant coil 110.

### DESCRIPTION OF THE REFERENCE SIGNS

100 electric vehicle, 110 secondary self-resonant coil, 120 secondary coil, 130 rectifier, 140 converter, 150 power storage device, 170 motor, 190 communication device, 200 power feeding device, 210 alternating current source, 220 high-frequency electric power driver, 230 primary coil, 240 primary self-resonant coil, 250 communication device, 310 high-frequency power source, 317, 320 primary coil, 330 primary self-resonant coil, 340 secondary self-resonant coil, 350 secondary coil, 360 load, 404 capacitor, 420, 421 main surface, 422, 425, 426 bottom section, 423, 424, 427, 428 axially-extending section, 430 non-contact power reception device, 440 virtual circular coil, 441 virtual rectangular coil, 445 dielectric member, 446 channel portion, 500 center line.

### BEST MODES FOR CARRYING OUT THE INVENTION

Hereinafter, a preferred embodiment of the present invention is described in detail referring to the drawings. Any identical or corresponding constitutive elements are simply shown with the same reference symbols to avoid redundant description.

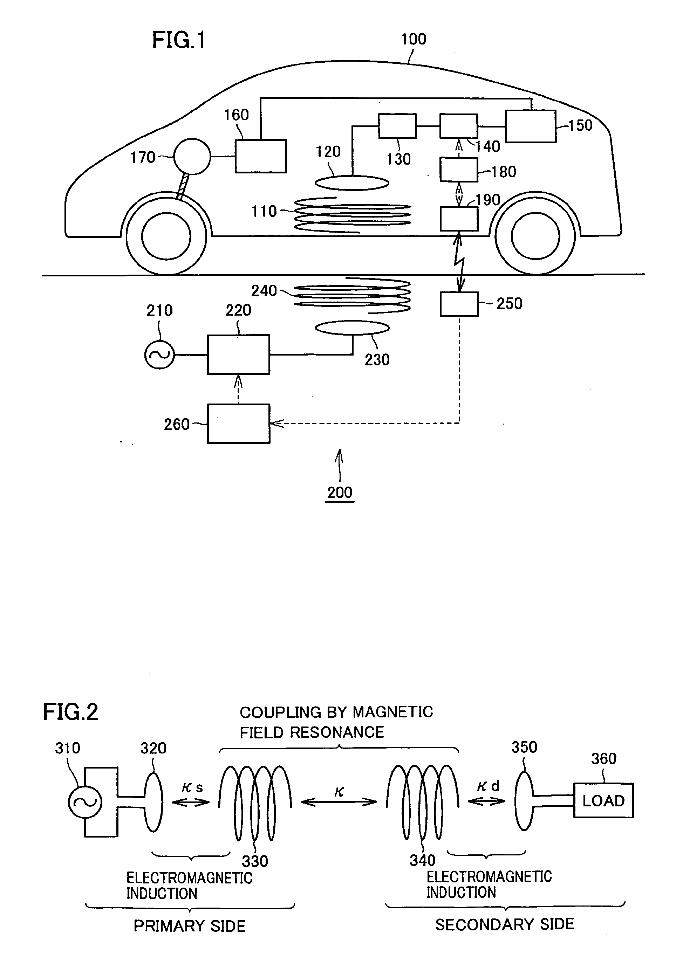

Fig. 1 is an overall view of a power feeding system according to a preferred embodiment of the present invention. Referring to Fig. 1, the power feeding system is equipped with a non-contact electric power reception device (non-contact electric power transfer device) provided in an electric vehicle 100, and a power feeding device (non-contact electric power transfer device) 200 provided outside of the vehicle. The non-contact electric power reception device is provided with a secondary self-resonant coil 110, a secondary coil 120, a rectifier 130, a DC/DC converter 140, and a power storage device 150. Electric vehicle 100 is provided with, in addition to the power reception device, a power control unit (hereinafter, may be referred to as "PCU") 160, a motor 170, a vehicle ECU (Electronic Control Unit) 180, and a communication device 190.

Secondary self-resonant coil 110 is provided in a lower section of the vehicle, however, may be provided in an upper section of the vehicle as far as power feeding device 200 can also be provided in the upper section of the vehicle. Secondary self-resonant coil 110 is an LC resonant coil in which both ends are open (non-contact). Secondary self-resonant coil 110 resonates with a primary self-resonant coil 240 (described later) of power feeding device 200 by way of an electromagnetic field so that electric power is received from power feeding device 200. In this description, a coil stray capacitance is a capacitance component of secondary self-resonant coil 110, or a capacitor to be connected to the both ends of the coil may be provided otherwise.

The number of windings of secondary self-resonant coil 110 can be suitably set so that a Q value indicating a resonance strength between primary self-resonant coil 240 and secondary self-resonant coil 110 (for example, Q > 100) and κ indicating a degree of coupling therebetween show larger values based on a distance between secondary self-resonant coil 110 and primary self-resonant coil 240 of power feeding device 200 and resonance frequencies of primary self-resonant coil 240 and secondary self-resonant coil 110.

Secondary coil 120 is provided coaxial with secondary self-resonant coil 110 and can be magnetically coupled with secondary self-resonant coil 110 through electromagnetic induction. Secondary coil 120 retrieves electric power received by secondary self-resonant coil 110 by using electromagnetic induction and outputs the retrieved power to rectifier 130. Rectifier 130 rectifies an alternating current retrieved by secondary coil 120.

DC/DC converter 140 converts the electric power rectified by rectifier 130 into a voltage level of power storage device 150 based on a control signal transmitted from vehicle ECU 180 and outputs a conversion result thereby obtained to power storage device 150. In the case where electric power is received from power feeding device 200 while the vehicle is traveling (power feeding device 200 is provided in the upper section or either of side sections of the vehicle in that case), DC/DC converter 140 may convert the power rectified by rectifier 130 into a system voltage and directly send a conversion result thereby obtained to PCU 160. DC/DC convert 140 is not an indispensable constitutive element, and the alternating current retrieved by secondary coil 120 may be rectified by rectifier 130 and then directly imparted to power storage device 150.

Power storage device 150 is a rechargeable direct current power source, including a lithium-ion or nickel-hydrogen secondary battery. In power storage device 150, electric power supplied from DC/DC converter 140 and regenerative electric power generated by motor 170 are stored. Then, power storage device 150 supplies the power stored therein to PCU 160. A capacitor having a large capacitance can be used as power storage device 150, and any electric power buffer is usable as far as it can temporarily store therein the power supplied from power feeding device 200 and the regenerative electric power generated by motor 170 and supply the stored power to PCU 160.

PCU 160 drives motor 170 using the electric power outputted from power storage device 150 or the electric power directly supplied from DC/DC converter 140. Further, PCU 160 rectifies the regenerative electric power generated by motor 170 and outputs the rectified regenerative electric power to power storage device 150 in order to charge power storage device 150. Motor 170 is driven by PCU 160, and a vehicle drive force thereby generated is outputted to driving wheels. Motor 170 generates electric power using a kinetic energy received from driving wheels and an engine not shown, and outputs the generated regenerative power to PCU 160.

When the vehicle is traveling, vehicle ECU 180 controls PCU 160 based on a traveling status of the vehicle and a state of charge in power storage device 150 (hereinafter, may be referred to as "SOC"). Communication device 190 is a communication interface for wirelessly communicating with power feeding device 200 outside of the vehicle.

Power feeding device 200 includes an alternating current power source 210, a high-frequency electric power driver 220, a primary coil 230, a primary self-resonant coil 240, a communication device 250, and an ECU 260.

Alternating current power source 210 is a power source provided outside of the vehicle, for example, a system power supply. High-frequency electric power driver 220 converts electric power received from alternating current power source 210 into high-frequency electric power and supplies the converted high-frequency electric power to primary coil 230. The high-frequency electric power generated by high-frequency electric power driver 220 has a frequency in the range of, for example, 1 MHz - 10-odd MHz.

Primary coil 230 is provided coaxial with primary self-resonant coil 240, and can be magnetically coupled with primary self-resonant coil 240 through electromagnetic induction. Primary coil 230 supplies the high-frequency electric power from high-frequency electric power driver 220 to primary self-resonant coil 240 by using electromagnetic induction.

Primary self-resonant coil 240 is provided near the ground, or may be provided in the upper section of the vehicle in the case where electric vehicle 100 is supplied with power from the upper section of the vehicle. Primary self-resonant coil 240 is also an LC resonant coil in which both ends are open (non-contact). Primary self-resonant coil 240 resonates with secondary self-resonant coil 110 of electric vehicle 100 by way of an electromagnetic field so that electric power is transmitted to electric vehicle 100. In a manner similar to the earlier description, a capacitance component of primary self-resonant coil 240 corresponds to a coil stray capacitance. However, a capacitor to be connected to the both ends of the coil may be provided.

The number of windings of primary self-resonant coil 240 can also be suitably set so that the Q value (for example, Q > 100) and κ indicating the degree of coupling shows larger values based on the distance between primary self-resonant coil 240 and secondary self-resonant coil 110 of electric vehicle 100 and resonance frequencies of primary self-resonant coil 240 and secondary self-resonant coil 110.

Communication device 250 is a communication interface for wirelessly communicating with electric vehicle 100 to be fed with power. ECU 260 controls high-frequency electric power driver 220 so that electric power received by electric vehicle 100 reaches a target value. More specifically, ECU 260 obtains the power received by electric vehicle 100 and its target value by using communication device 250, and controls outputs of high-frequency electric power driver 220 so that the power received by electric vehicle 100 is equal to the target value. ECU 260 can transmit an impedance value of power feeding device 200 to electric vehicle 100.

Fig. 2 is a diagram for describing the rationale of power transmission in which a resonance technique is employed. According to the resonance technique illustrated in Fig. 2, two LC resonant coils having an equal natural frequency resonate with each other in an electromagnetic field (near field) in a manner similar to the resonance of two tuning forks, so that electric power is transmitted from one of the coils to the other by way of the electromagnetic field.

More specifically, primary coil 320 is connected to high-frequency electric power source 310 so that primary self-resonant coil 330 magnetically coupled with primary coil 320 by the electromagnetic induction is fed with electric power having such a high frequency as 1 MHz to ten-odd MHz. Primary self-resonant coil 330 is an LC resonator constructed from its own inductance and stray capacitance, resonating with secondary self-resonant coil 340 having a resonance frequency equal to that of primary self-resonant coil 330 by way of the electromagnetic field (near field). As a result, an energy (electric power) is transferred from primary self-resonant coil 330 to secondary self-resonant coil 340 by way of the electromagnetic field. The energy (electric power) transferred to secondary self-resonant coil 340 is retrieved by secondary coil 350 magnetically coupled with secondary self-resonant coil 340 by the electromagnetic induction and imparted to load 360. The power transmission by means of the resonance technique can be carried out when a Q value indicating a resonance strength between primary self-resonant coil 330 and secondary self-resonant coil 340 is, for example, larger than 100.

Describing a correspondence relationship between Figs. 1 and 2, alternating current source 210 and high-frequency electric power driver 220 illustrated in Fig. 1 correspond to high-frequency power source 310 illustrated in Fig. 2. Further, primary coil 230 and primary self-resonant coil 240 illustrated in Fig. 1 respectively correspond to primary coil 320 and primary self-resonant coil 330 illustrated in Fig. 2, and secondary self-resonant coil 110 and secondary coil 120 illustrated in Fig. 1 respectively correspond to secondary self-resonant coil 340 and secondary coil 350 illustrated in Fig. 2. Rectifier 130 and other constitutive elements behind it illustrated in Fig. 1 are collectively illustrated as load 360.

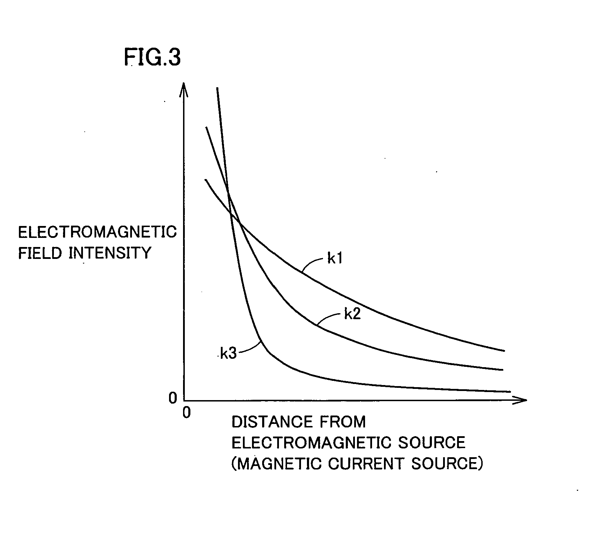

Fig. 3 is a graph illustrating a relationship between a distance from a current power source (magnetic current source) and a electromagnetic field intensity. Referring to Fig. 3, the electromagnetic field includes three components. A curve k1 is a component in inverse proportion to a distance from a wave source, generally called "radiation field". A curve k2 is a component in inverse proportion to the square of the distance from the wave source, generally called "induction field". A curve k3 is a component in inverse proportion to the cube of the distance from the wave source, generally called "electrostatic field".

The "electrostatic field" is a region where an electromagnetic intensity sharply drops over the distance from the wave source. The resonance technique leverages a near field (evanescent field) where the "electrostatic field" is dominant in order to transfer an energy (electric power). More specifically, a pair of resonators having an equal natural frequency (for example, a pair of LC resonant coils) is resonated in the near field where the "electrostatic field" is dominant, so that the energy (electric power) is transferred from one of the resonators (primary self-resonant coil) to the other resonator (secondary self-resonant coil). The "electrostatic field" does not transmit the energy over a long distance. According to the resonance technique, therefore, the power transmission can be accomplished with less energy loss than in the electromagnetic wave that transmits the energy (electric power) using the "radiation field" in which the energy is transmitted farther.

Non-contact electric power reception device 430 includes secondary self-resonant coil 110 and secondary coil 120 illustrated in Fig. 1. The vehicle is equipped with a non-contact electric power reception device for receiving electric power from a power transmission coil for transmitting electric power using power supplied from a power source outside of the vehicle.

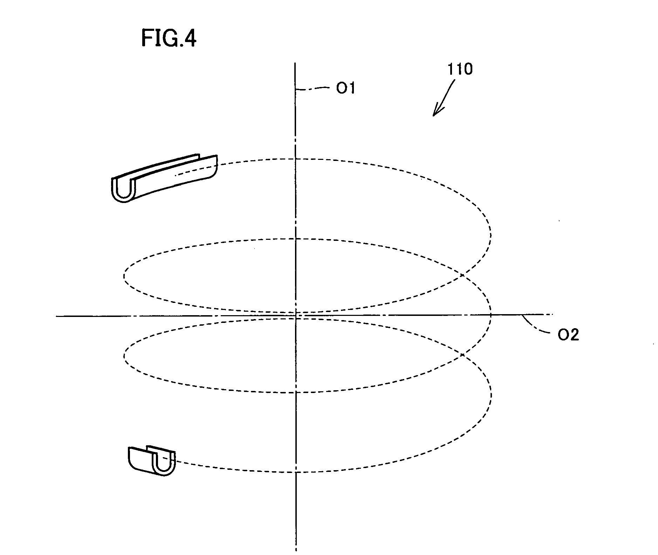

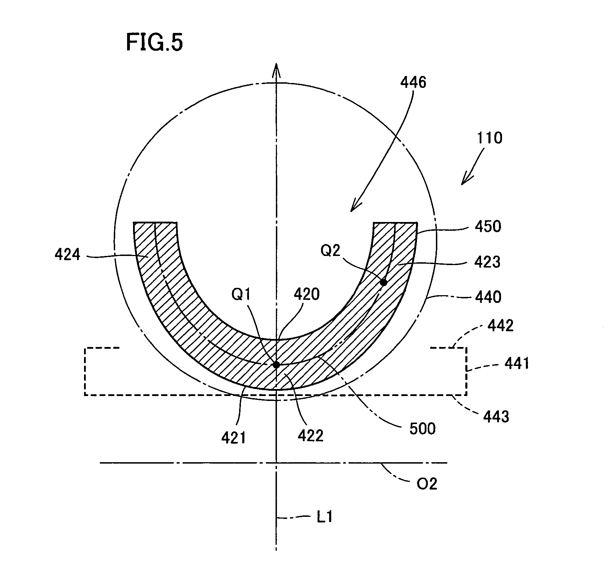

Fig. 4 is a perspective view schematically illustrating secondary self-resonant coil 110. As illustrated in Fig. 4, secondary self-resonant coil 110 is formed in a spirally-wound shape with its center on a center axis line O1. Fig. 5 is a sectional view of second self-resonant coil 110 in its cross section perpendicular to a direction where secondary self-resonant coil 110 extends. As illustrated in Fig. 5, a cross section 450 perpendicular to the direction where secondary self-resonant coil 110 extends has a substantially U shape.

A virtual circular coil 440 illustrated with a dashed line in Fig. 5 extends in a spiral shape in a manner similar to secondary self-resonant coil 110, and a cross section of virtual circular coil 440 perpendicular to a direction where it extends has a circular shape. A circumferential length of virtual circular coil 440 that defines a cross-sectional outer peripheral edge thereof is equal to a length of a line segment that defines an outer peripheral edge of cross section 450 of secondary self-resonant coil 110. It is a technical common knowledge that, when a high-frequency current is passed through a coil wire, the current mostly runs on a surface of the coil wire (skin effect). The cross-sectional circumferential length of virtual circular coil 440 is equal to the length of the cross-sectional outer peripheral edge of secondary self-resonant coil 110. Therefore, an electrical resistance generated when the high-frequency current runs through virtual circular coil 440 is equal to an electrical resistance generated when the high-frequency current runs through secondary self-resonant coil 110.

As is clearly known from Fig. 5, an area of cross section 450 of secondary self-resonant coil 110 is set to be smaller than an area of the cross section of virtual circular coil 440. Thus, secondary self-resonant coil 110 is reduced in size as compared with virtual circular coil 440. More specifically, the cross-sectional shape of secondary self-resonant coil 110 is reduced in size as compared with the cross-sectional shape of virtual circular coil 440 in both a radial width and an axial height.

Comparing secondary self-resonant coil 110 to the virtual circular coil in which the cross section perpendicular to the direction where the coil extends has an area equal to that of cross section 450, the line segment that defines the outer peripheral edge of cross section 450 of secondary self-resonant coil 110 is longer than the line segment that defines the cross-sectional outer peripheral edge of the virtual circular coil.

Accordingly, the electrical resistance generated in secondary self-resonant coil 110 when the high-frequency current is passed therethrough can be controlled to be smaller than the electrical resistance of the virtual circular coil.

It is known from the description given so far that secondary self-resonant coil 110 having the U shape contributes to reduction of the coil dimensions and alleviation of the electrical resistance generated by the high-frequency current.

Secondary self-resonant coil 110 has a shape obtained by axially curving both ends of a virtual rectangular coil 441 in a radial direction illustrated with a broken line in Fig. 5.

Virtual rectangular coil 441 is a coil having a spirally-wound shape in a manner similar to secondary self-resonant coil 110. A cross section of virtual rectangular coil 440 perpendicular to a direction where virtual rectangular coil 441 extends has such a rectangular shape that a main surface 442 and a main surface 443 are disposed in the direction of center axis line O1.

Secondary self-resonant coil 110 has the shape obtained by axially curving the ends of virtual rectangular coil 441 in the radial direction as described earlier. Therefore, a length of a line segment that defines a cross-sectional outer peripheral edge of virtual rectangular coil 441 is equal to the length of the line segment that defines the outer peripheral edge of cross section 450 of secondary self-resonant coil 110. Accordingly, the skin effect makes an electrical resistance of virtual rectangular coil 441 in response to the high-frequency current become equal to the electrical resistance of secondary self-resonant coil 110.

At the same time, secondary self-resonant coil 110 is formed such that at least one of the radial ends of virtual rectangular coil 441 is bent or curved in the direction of center axis line O1. Therefore, a width of cross section 450 of secondary self-resonant coil 110 in a radial direction L2 is smaller than a radial width of virtual rectangular coil 441. Thus, secondary self-resonant coil 110 is radially downsized.

The downsizing is particularly attained in the radial dimension of cross section 450 because the cross section of secondary self-resonant coil 110 has the substantially U shape, and the radial ends of secondary self-resonant coil 110 on both sides are bent in the direction of center axis line O1.

Secondary self-resonant coil 110 is provided so that a main surface 420 and a main surface 421 thereof face each other in the direction of center axis line O1. Main surface 420 and main surface 421 are both curved in an arc shape, and main surface 420 constitutes a channel portion 446. Channel portion 446 is formed to be open in an axial direction L1 included in the direction of center axis line O1.

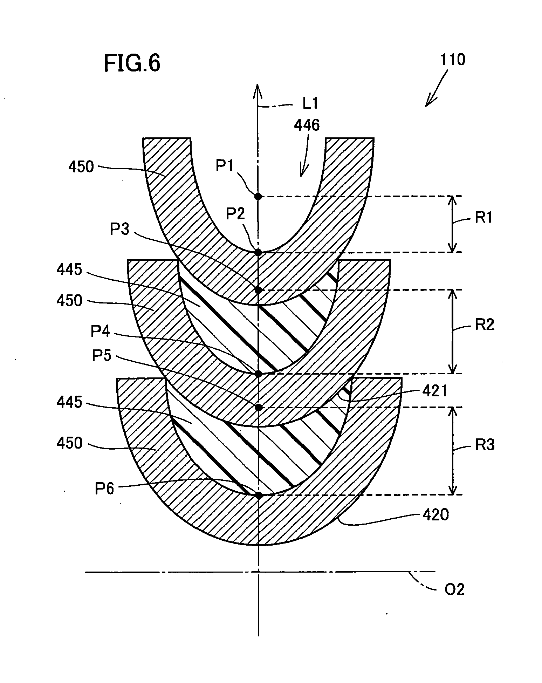

Fig. 6 is a sectional view of a part of secondary self-resonant coil 110 in its cross section along the direction of center axis line O1.

As illustrated in Fig. 6, a dielectric member 445 fills a space between main surface 420 of secondary self-resonant coil 110 that forms channel portion 446 and main surface 421 thereof adjacent to main surface 420 in the axial direction L1. Accordingly, a stray capacitance having a predetermined capacitance can be obtained without separately providing a capacitor, and the stray capacitance can be used as the capacitance component of secondary self-resonant coil 110. A material such as silicon is used for the dielectric member.

Secondary self-resonant coil 110 is formed so that a curvature that defines a bottom section of channel portion 446 is progressively smaller from the end thereof in the axial direction L1 toward the other end thereof. More specifically, a bottom section P1, a bottom section P2 and a bottom section P3 are serially aligned from the end of secondary self-resonant coil 110 on the side of axial direction L1 toward the other end side, and these bottom sections are formed so that respective curvature radiuses R1, R2 and R3 are increased in the order. Therefore, an opening width of channel portion 446 is increased from the side of axial direction L1 toward the other end side.

According to the structure, channel portion 446 can accommodate at least a part of secondary self-resonant coil 110 closer to the side of axial direction L1 than channel portion 446. Since a part of secondary self-resonant coil 110 can be thus accommodated in channel portion 446, secondary self-resonant coil 110 can have a reduced dimension in the direction of center axis line O1. In the case where secondary self-resonant coil 110 is provided in a floor panel, such a smaller dimension thus obtained in the direction of center axis line O1 can prevent the coil from overly protruding from the floor panel.

In the example illustrated in Fig. 6, secondary self-resonant coil 110 is formed so that a part thereof is contained in channel portion 446. However, secondary self-resonant coil 110 may be spirally wound such that a part thereof is not contained in channel portion 446.

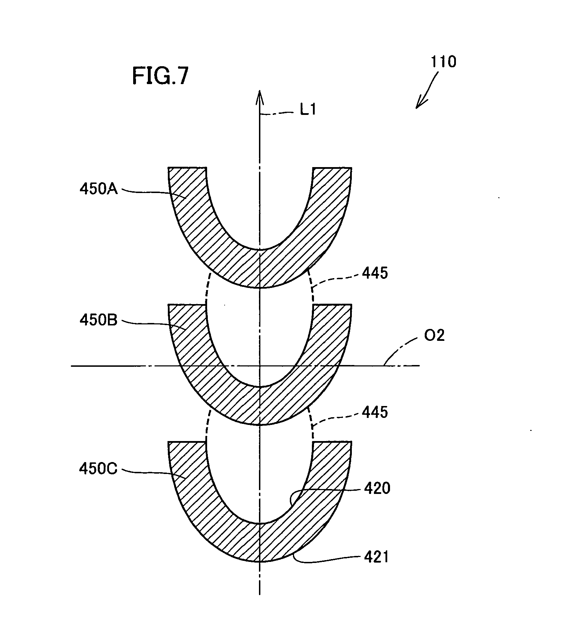

Fig. 7 is a sectional view illustrating a modified embodiment of the spirally-wound state of secondary self-resonant coil 110. As illustrated in Fig. 7, secondary self-resonant coil 110 is formed in such a spirally-wound shape that respective winds are spaced from one another in the direction of center axis line O1. Accordingly, main surface 420 and main surface 421 are both exposed outward, allowing heat to be released outward from main surface 420 and main surface 421.

A dielectric member 445 may fill a space between main surface 420 and main surface 421 as illustrated with a broken line in Fig. 7. In that case, side parts of a surface of dielectric member 445 in the radial direction of secondary self-resonant coil 110 are exposed outward. Then, heat transmitted to dielectric member 445 from main surfaces 420 and 421 of secondary self-resonant coil 110 to dielectric member 445 is released outward from the side surfaces of dielectric member 445.

In the examples illustrated in Figs. 5 and 7, secondary self-resonant coil 110 has main surfaces 420 and 421 facing each other and exposed outward, and at least a part of a center line 500 passing through between main surface 420 and main surface 421 extends so as to intersect with a virtual axis line 02 extending along the radial direction of secondary self-resonant coil 110.

In sections of secondary self-resonant coil 110 where center line 500 extends in the direction where it intersects with the virtual axis line 02, vector components in the radial direction are lessened, consequently leading to reduction of the radial width of secondary self-resonant coil 110.

In the examples illustrated in Figs. 5 and 7, center line 500 extends in the direction where it intersects with virtual axis line 02 in any sections of secondary self-resonant coil 110 other than bottom section 422. As a result, a remarkable reduction of the radial width can be accomplished. Another advantage is that main surfaces 420 and 421 exposed outward can release heat outward directly or by way of the other members, for example, the dielectric member.

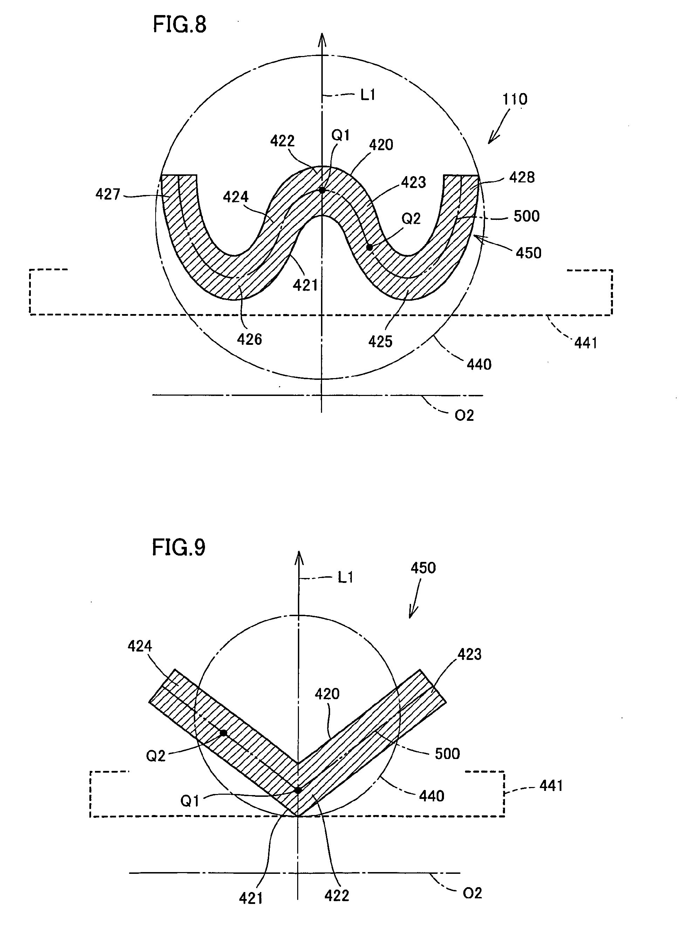

Fig. 8 is a sectional view illustrating a first modified embodiment of the cross-sectional shape of secondary self-resonant coil 110. As illustrated in Fig. 8, secondary self-resonant coil 110 may be formed to have a M letter in its cross section. In the example illustrated in Fig. 8, a plurality of bottom sections 422, 425 and 426 are formed, and axially-extending sections 423, 424, 427 and 428 extending in a direction where they intersect with virtual axis line 02 are formed at positions radially adjacent to bottom sections 422, 425 and 426.

When virtual rectangular coil 441 is bent or curved a plurality of times in the direction of center axis line O1, the radial width can be decreased, while the dimension in the direction of center axis line O1 is still prevented from increasing.

Fig. 9 is a sectional view illustrating a second modified embodiment of the cross-sectional shape of secondary self-resonant coil 110. As illustrated in Fig. 9, virtual rectangular coil 441 is not necessarily curved, and a shape obtained by bending virtual rectangular shape 441 may be used.

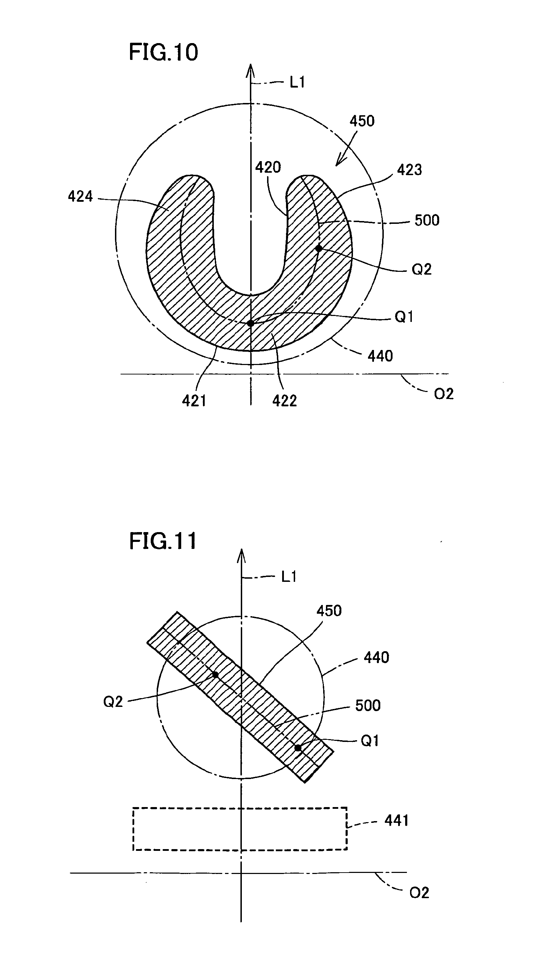

Fig. 10 is a sectional view illustrating a third modified embodiment of the cross-sectional shape of secondary self-resonant coil 110. As illustrated in Fig. 10, secondary self-resonant coil 110 is not necessary formed by deforming virtual rectangular coil 441. A shape obtained by deforming a virtual coil having an oval shape or an elliptical shape in its cross section may be used.

Fig. 11 is a sectional view illustrating a fourth modified embodiment of the cross-sectional shape of secondary self-resonant coil 110. As illustrated in Fig. 11, a shape obtained by tilting virtual rectangular coil 441 so that center line 500 of virtual rectangular coil 441 intersects with virtual axis line 02 is also an option.

When virtual rectangular coil 441 is thus tiltingly deformed, the radial width of secondary self-resonant coil 110 can be smaller than the radial width of virtual rectangular coil 441, resulting in reduction of the radial dimension.

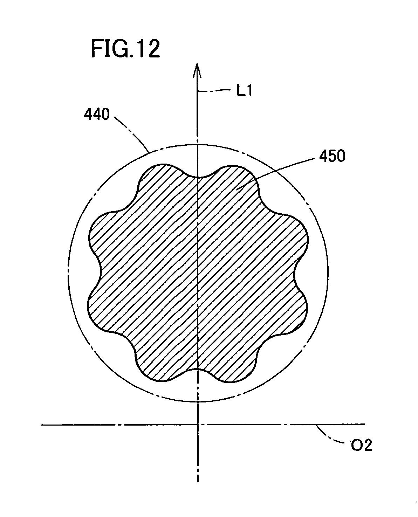

Fig. 12 is a sectional view illustrating a fifth modified embodiment of the cross-sectional shape of secondary self-resonant coil 110. In the example illustrated in Fig. 12, a plurality of recessed portions (dented portions) or protruding portions are formed on an outer peripheral surface of secondary self-resonant coil 110. Secondary self-resonant coil 110 thus formed can have a cross-sectional area smaller than that of virtual circular coil 440. As a result, secondary self-resonant coil 110 can be produced in a compact size.

Figs. 4 to 12 illustrate the possible shapes of secondary self-resonant coil 110. These shapes of secondary self-resonant coil 110 can be applied to primary self-resonant coil 240 as well.

The non-contact electric power reception device described in the respective embodiments can be loaded in a variety of electric vehicles. Examples of the electric vehicles are a series / parallel hybrid car capable of splitting a mechanical power of an engine using a power split device and transmitting the split mechanical powers to driving wheels and a motor generator, in addition to hybrid cars of other types. More specifically, the present invention can be applied to such hybrid cars as a generally-called series hybrid car where an engine is exclusively used for driving a motor generator, and a vehicle drive force is generated solely by the motor generator, a hybrid car where, of a kinetic energy generated by an engine, a regenerative energy alone is collected as an electric energy, and a motor-assisted hybrid car where an engine is used as a principal mechanical power with occasional assistance from a motor whenever necessary.

The present invention is also applicable to an electricity-driven automobile where no engine is provided, a fuel battery car provided with a fuel battery as a direct current power source in addition to a power storage device, and an electric vehicle where no boost converter is provided.

The embodiments disclosed in this specification are merely the illustration of examples in all aspects and should not restrict the present invention by any means. The scope of the present invention is based on not the description of embodiments but the appended scope of claims, and it is intended to cover all of such modifications as fall within the scope of the appended claims and the meaning and scope of equivalent.

## Claims

1. A self-resonant coil (110, 240) to be used in a non-contact electric power transfer device capable of at least one of electric power transmission and electric power reception by using magnetic field resonance, wherein
a coil having a circular shape in a cross section thereof perpendicular to a direction where the coil extends, a circumferential length of the coil that defines the cross section being equal to a length of a line segment that defines a cross-sectional outer peripheral edge of said self-resonant coil (110, 240) when the self-resonant coil is observed in a cross section thereof perpendicular to a direction where said self-resonant coil (110, 240) extends is used as a virtual coil (440), and
at least one of said radial width and said axial length of the self-resonant coil (110, 240) in the cross section thereof perpendicular to the direction where said self-resonant coil (110, 240) extends is smaller than a diameter of the cross section of said virtual coil.

2. A self-resonant coil (110, 240) to be used in a non-contact electric power transfer device capable of at least one of electric power transmission and electric power reception by using magnetic field resonance, wherein
said self-resonant coil (110, 240) comprises first and second main surfaces (420, 421) facing each other, and
at least a part of a center line (500) passing through between said first main surface (420) and said second main surface (421) extends so as to intersect with a virtual axis line (02) extending in a radial direction of said self-resonant coil (110, 240).

3. A self-resonant coil (110, 240) to be used in a non-contact electric power transfer device capable of at least one of electric power transmission and electric power reception by using magnetic field resonance, wherein
a cross section of said self-resonant coil (110, 240) perpendicular to a direction where said self-resonant coil (110, 240) extends has a shape obtained by bending or curving a plate-shape member (441) having main surfaces disposed in an axial direction of said self-resonant coil (110, 240) in the axial direction of said self-resonant coil (110, 240).

4. A self-resonant coil (110, 240) to be used in a non-contact electric power transfer device capable of at least one of electric power transmission and electric power reception by using magnetic field resonance, wherein
a cross section of said self-resonant coil (110, 240) perpendicular to a direction where said self-resonant coil (110, 240) extends has a substantially U shape or a substantially V shape.

5. The self-resonant coil (110, 240) according to claim 4, wherein
the cross section of said self-resonant coil (110, 240) having the substantially U shape or the substantially V shape forms a channel portion open in an axial direction of said self-resonant coil (110, 240), and said channel portion accommodates at least a part of said self-resonant coil (110, 240) adjacent to a position of said channel portion in said axial direction.

6. The self-resonant coil (110, 240) according to claim 5, wherein
a curvature of a bottom section of said channel portion is progressively smaller from an end side of said self-resonant coil (110, 240) in said axial direction toward an end side thereof in another axial direction.

7. The self-resonant coil (110, 240) according to claim 4, further comprising a dielectric member (445) disposed between said first main surface (420) and said second main surface (421).

8. A non-contact electric power transfer device comprising said self-resonant coil (110, 240) according to claim 4, and a primary coil for transferring electric power to and from said self-resonant coil (110, 240) by using electromagnetic induction.

9. A vehicle comprising the non-contact electric power transfer device according to claim 8.
